## Europäisches Patentamt
## European Patent Office
## Office européen des brevets

(19)

(11) Numéro de publication: **0 020 252**
**A1**

(12) # DEMANDE DE BREVET EUROPEEN

(21) Numéro de dépôt: **80400723.5**

(22) Date de dépôt: **23.05.80**

(51) Int. Cl.³: **D 06 F 39/02**, G 01 F 11/28

(30) Priorité: **29.05.79 FR 7913629**

(43) Date de publication de la demande: **10.12.80**
**Bulletin 80/25**

(84) Etats contractants désignés: **BE DE GB IT NL SE**

(71) Demandeur: **"THOMSON-BRANDT"**, 173, bld
Haussmann, F-75360 Paris Cedex 08 (FR)

(72) Inventeur: **Burgel, Christian, "THOMSON-CSF"**
SCPI 173, Bld. Haussmann, F-75360 Paris Cedex 08 (FR)

(74) Mandataire: **Thrierr, Francoise et al, "THOMSON-CSF"-**
SCPI 173, bld Haussmann, F-75360 Paris Cedex 08 (FR)

(54) **Ensemble distribuant des doses de produit liquide, et appareil, tel qu'une machine à laver, muni d'un tel ensemble.**

(57) Appareil muni d'un ensemble distribuant et dosant de produit liquide comprenant un réservoir à produit (6) herméti-quement fermé, un bac pour le dosage (8) mis en communication par canalisation (12, 11) respectivement avec la partie la plus haute et la partie la plus basse de ce réservoir à produit (6) et un système de distribution et de rinçage (9) ayant une conduite d'alimentation en eau (13) commandée par une élec-trovanne et débouchant dans la partie supérieure du bac (8), une canalisation coudée servant de siphon d'évacuation (15) ayant une extrémité (17) débouchant dans ce bac (8) et un tuyau (16) débouchant dans la partie supérieure de ce bac (8) et servant de moyen de mise à l'air et de voie d'évacuation de produit.

EP 0 020 252 A1

1

# ENSEMBLE DISTRIBUANT DES DOSES DE PRODUIT LIQUIDE, ET APPAREIL, TEL QU'UNE MACHINE A LAVER, MUNI D'UN TEL ENSEMBLE.

La présente invention concerne un ensemble distribuant des doses de produit liquide et un appareil muni d'un tel ensemble.

Un appareil tel qu'une machine à laver le linge ou la vaisselle comprend habituellement un récipient assurant un maintien momentané et une injection, à un instant prédéterminé de son fonctionnement, d'une dose de produit de traitement dans sa cuve. Ce produit de traitement peut être un produit de lavage, rinçage, blanchiment ou assouplissant etc... Cependant un grand nombre d'appareils connus ne possèdent pas dans leur enceinte une réserve de produits de traitement, et reçoivent préalablement à chacune de leur mise en marche, une dose de produit déposée manuellement, dans leur récipient à produit. A cet inconvénient s'ajoute le fait que ce récipient à produit n'est jamais rincé à l'eau et l'encrassement qui en résulte peut empêcher inopportunément ce récipient de remplir correctement sa fonction.

Toutefois, dans certains appareils connus existe une réserve de produit de traitement, mais celle-ci est par structure, constamment mise à l'air en vue de faciliter le soutirage du produit qu'elle contient. Cette mise à l'air continue provoque désavantageusement une oxydation rapide du produit en réserve. En outre, dans ces appareils connus, le soutirage du produit de la réserve exige souvent la présence d'un appareillage relativement compliqué et comportant des pièces mécaniques en mouvement. La fiabilité de cet appareillage dépend notamment du bon fonctionnement de ces pièces mécaniques.

La présente invention, ayant pour but d'éviter ces inconvénients permet de réaliser un ensemble, constitué notamment d'organes statiques, assurant à la fois le stockage, le dosage et la distribution d'un produit liquide, et le rinçage à l'eau qui empêche tout encrassement inopportun ; et un appareil muni d'un tel ensemble qui distribue automatiquement des doses de produit suivant le fonctionnement de l'appareil.

Selon l'invention, un ensemble distribuant des doses de produit liquide, ayant un réservoir pour le stockage et des moyens pour le dosage de ce produit est caractérisé en ce qu'il comprend, au moins, un réservoir à produit hermétiquement fermé par un bouchon, un bac fermé assurant le dosage du produit, monté à un niveau inférieur à celui du réservoir et mis en communication par canalisations, respectivement avec la partie la plus haute et avec la partie la plus basse de ce réservoir, et un système de distribution du produit et de rinçage, constitué de trois éléments, à savoir une conduite d'alimentation en eau commandée par une électrovanne et débouchant dans la partie supérieure du bac, une canalisation coudée ayant une extrémité débouchant dans ce bac, et une deuxième extrémité se prolongeant à un point au-dessous du niveau de ce bac et servant de siphon d'évacuation, et un tuyau coudé débouchant dans la partie supérieure de ce bac et servant de moyen de mise à l'air, et de voie d'évacuation du produit.

Pour mieux faire comprendre l'invention on en décrit ci-après un certain nombre d'exemples de réalisation, illustrés par des dessins ci-annexés dont

- La figure 1 représente une vue schématique et partielle d'une machine à laver le linge, munie d'un ensemble distribuant automatiquement des doses de produit de traitement, réalisé conformément à l'invention ;

- La figure 2 représente à une autre échelle, une vue schématique de l'ensemble distribuant automatiquement des doses de produit de traitement, de l'appareil de la figure 1 ;

- La figure 3 représente une première variante de réalisation de l'ensemble distribuant automatiquement des doses de produit de traitement, illustré dans la figure 2 et,

- La figure 4 représente une deuxième variante de réalisation de l'ensemble distribuant automatiquement des doses de produit de traitement, illustré dans la figure 2.

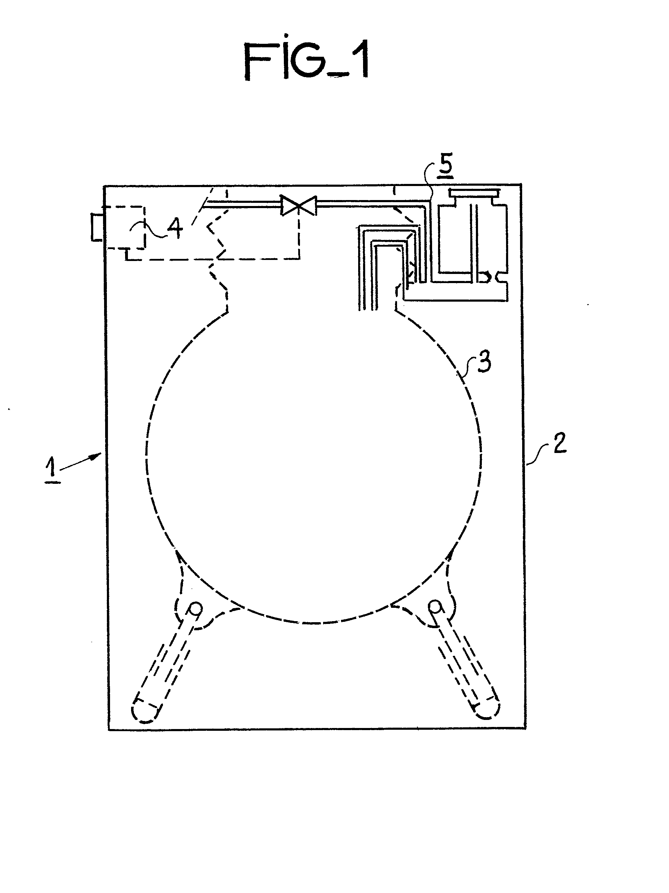

Un appareil 1, réalisé selon l'invention et présenté sous la forme d'une machine à laver le linge illustrée dans la figure 1, comprend une carrosserie 2, une cuve 3 destinée à recevoir des articles à laver, un programmateur 4 commandant les opérations à accomplir par l'appareil, prévues dans des programmes prédéterminés de fonctionnement, et un ensemble 5 qui assure un stockage, un dosage, une distribution automatique des doses de produit, et un rinçage à l'eau empêchant tout encrassement inopportun.

L'ensemble 5 est monté dans la partie de l'appareil qui est située au-dessus du niveau maximal que peut habituellement atteindre le liquide de lavage dans la cuve 3.

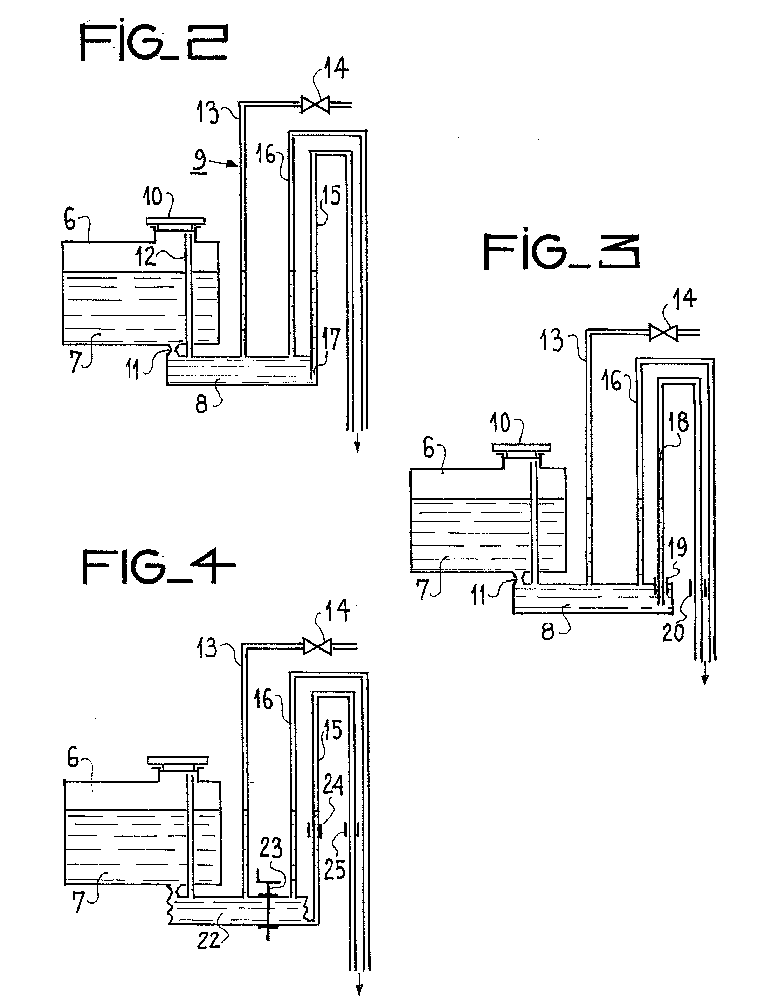

L'ensemble 5 illustré dans les figures 1 et 2 comprend un réservoir 6 pour le stockage d'un produit liquide de traitement 7, un bac 8 de dosage de ce produit, un système 9 de distribution des doses de ce produit liquide dans la cuve 3 et de rinçage.

Le réservoir 6 est constitué par un récipient ayant un volume dépassant plusieurs fois celui de la dose de produit à injecter, et une forme affectant toute forme géométrique désirée. Ce réservoir 6 est maintenu hermétiquement clos par un bouchon 10, et mis en communication non seulement avec la partie la plus basse du bac 8 de dosage qui se trouve à un niveau inférieur, au moyen d'une conduite de petit diamètre 11, mais également avec la partie la plus haute de ce bac 8, au moyen d'une canalisation 12.

Le bac 8 de dosage est constitué par un récipient fermé dont le volume constitue pratiquement une dose prévue du produit liquide à distribuer. Ce bac 8 de dosage, en dehors de sa liaison avec le réservoir 6 est en communication avec le système 9 de distribution et de rinçage qui comprend trois éléments, à savoir une conduite d'alimentation en eau 13 commandée par une électrovanne 14, une canalisation coudée 15 servant de siphon d'évacuation, et un tuyau coudé 16 servant de moyen de mise à l'air et de voie d'évacuation. La conduite 13 et le tuyau 16 sont en communication avec la partie supérieure du bac de dosage 8 tandis que la canalisation 15 comprend une extrémité 17 débouchant dans ce bac 8. Dans

4

l'exemple illustré à la figure 2, l'extrémité 17 de la canalisation 15 est disposée à proximité du fond du bac 8. La canalisation coudée 15 et le tuyau coudé 16 ont les sommets de leurs coudes situés au-dessus du niveau maximal de produit liquide 7 se trouvant dans le réservoir 6. L'électrovanne 14 qui commande l'écoulement de l'eau dans la conduite 13 est actionnée par le programmateur 4 de l'appareil.

A l'instant prévu d'injection de la dose de produit liquide de traitement dans la cuve 3, le programmateur 4 ouvre l'électrovanne 14, et l'eau venant d'une source de distribution non représentée, entre par la conduite 13, dans le bac 8 de dosage, et chasse le produit liquide qui s'y trouve. Le produit et l'eau s'évacuent par la canalisation coudée 15 et le tuyau coudé 16. L'eau qui entre dans le bac 8 crée une même valeur de pression dans le haut et dans le bas du réservoir 6, à travers respectivement la canalisation 12 et la conduite 11. Dans cette condition de pression, la masse de produit liquide 7 reste en équilibre dans le réservoir 6 et l'eau ne pénètre pas dans ce réservoir 6. Quand le produit se trouvant dans le bac 8 de dosage est complètement remplacé par l'eau venant de la conduite 13, l'arrivée de l'eau continue et le passage de cette eau a pour effet de nettoyer à la fois ce bac 8 et les canalisations 15 et tuyau 16. Ce rinçage énergique à l'eau permet d'éviter tout encrassement inopportun de ces derniers. La fin de l'opération d'injection de la dose de produit de traitement dans la cuve 3 est commandée également par le programmateur 4 qui ferme l'électrovanne 14 et coupe ainsi l'alimentation en eau du bac 8 de dosage. L'eau résiduelle dans le bac 8 est évacuée par l'effet de siphonage au moyen de la canalisation coudée 15. Le diamètre de la conduite 11 qui relie le réservoir 6 au bac 8, est prévu nettement inférieur à celui de la canalisation coudée 15 pour que l'eau soit évacuée par cette canalisation 15, avant l'arrivée dans ce bac 8 à travers la conduite 11, d'une quantité significative de produit liquide de traitement . Durant la fermeture de l'électrovanne 14, le produit liquide 7 par gravité descend du réservoir 6, à travers la conduite 11 dans le bac 8, pour remplir ce dernier et réaliser ainsi automatiquement le dosage du produit. Ce mouvement de descente du produit liquide 7 dans le bac 8 s'arrête automatiquement d'après le principe des vases communicants, dès que le niveau de produit liquide qui déborde le bac 8 et remonte dans la canalisation 15 et le tuyau 16, s'aligne avec le niveau de produit restant dans le réservoir 6. Les colonnes de produit liquide de traitement dans les canalisation 15 et tuyau 16 représentent selon la construction prévue une quantité relativement faible par rapport au volume du bac 8 et demeurant inférieures aux tolérances admises dans la détermination habituelle de la dose de tel produit de traitement.

Dans une première variante de réalisation de l'invention illustrée dans la figure 3, l'ensemble 5 qui assure un stockage, un dosage, une distribution automatique de doses de produit liquide de traitement et un rinçage à l'eau comprend les mêmes organes ou éléments que ceux de l'ensemble 5 illustré dans la figure 2 à l'exception de la canalisation coudée 15 servant de siphon d'évacuation de liquide.

Selon cette variante de réalisation, la canalisation fixe et coudée 15 de l'ensemble 5 de la figure 2 est remplacée par une canalisation 18 coudée dont l'une des extrémités est montée réglable en hauteur dans le bac 8. La canalisation coudée 18 est, par exemple guidée au niveau du bac 8 par un fourreau 19 qui rend son extrémité verticalement coulissante et étanche, et au niveau de sa deuxième branche par une pièce de guidage 20. Le montage coulissant de la canalisation 18 permet d'approcher ou d'éloigner son extrémité du fond du bac 8 de dosage. Quand l'extrémité de la canalisation 18 est à proximité du fond du bac 8 et l'électrovanne 14 est fermée, toute la quantité d'eau contenue dans le bac 8 est évacuée par siphonage par cette canalisation 18, avant l'arrivée du produit liquide 7, par la conduite 11. Il en résulte que le volume entier du bac 8 est disponible pour accueillir l'arrivée de ce produit liquide 7 venant du réservoir 6. La dose de produit 7 est dans ce cas maximale. Quand l'extrémité de la canalisation 18 se trouve par exemple à une moitié de la hauteur du bac 8, une moitié de l'eau contenue dans ce bac 8 peut être seulement vidée par siphonage par cette canalisation 18. En effet, lorsque le niveau d'eau dans le bac 8 descend au-dessous du niveau de l'extrémité de la canalisation 18, le siphonage est désamorcé et l'évacuation de l'eau du bac est arrêtée. Dans ce cas, une moitié seulement du volume du bac 8 est disponible pour accueillir le produit liquide 7 descendant du réservoir 6. La dose de produit est alors diminuée de moitié par rapport à la dose maximale indiquée dans un paragraphe précédent. Par un réglage de la position de l'extrémité de la canalisation 18 dans le bac 8, on obtient un réglage de l'importance de la dose de produit 7, destiné à être injecté dans la cuve 3.

Dans une deuxième variante de réalisation de l'invention illustrée dans la figure 4, l'ensemble 5 qui assure un stockage, un dosage, une distribution automatique de doses de produit liquide de traitement et un rinçage à l'eau comprend les mêmes organes ou éléments que ceux de l'ensemble illustré dans la figure 2 à l'exception du bac 8 qui est remplacé par un bac 22 réglable en volume. Ce bac 22 est constitué par un récipient à paroi latérale en forme de soufflet schématiquement représenté dans la figure 4, ou sous une forme télescopique non représentée. Le volume du bac 22 est réglé par exemple par un dispositif 23 tel qu'un système à vis et écrou schématiquement représenté, ou tout autre système connu qui permet de rapprocher ou éloigner les deux parois opposées du bac 22 pour diminuer ou augmenter respectivement le volume du bac 8 et par conséquent, la dose de produit liquide 7 destiné à être injecté dans la cuve 3, l'extrémité de la canalisation coudée 15 débouchant dans le bac 8, étant en un point près du fond du bac 8. Lors du réglage du volume du bac 22, la canalisation coudée 15 peut coulisser par exemple dans des dispositifs du guidage 24 et 25.

Dans les variantes de réalisation des figures 3 et 4, une fois que le réglage du volume de la dose de produit liquide soit par ajustement de l'extrémité de la conduite coudée 15 dans le bac 8, soit par ajustement du volume du bac 8, est terminé, les organes ou

7

les éléments de l'ensemble 5 sont bloqués dans leurs positions respectives. Il en résulte que, comme dans l'exemple de la figure 2, les organes de l'ensemble 5 assurant le stockage, le dosage, la distribution ou l'évacuation du produit liquide de traitement et le rinçage sont entièrement statiques. Le risque de panne mécanique dans le fonctionnement de l'ensemble 5 est de ce fait négligeable ou pratiquement éliminé.

## REVENDICATIONS

1. Ensemble distribuant des doses de produit liquide, ayant un réservoir pour le stockage, un bloc pour le dosage de ce produit monté à un niveau inférieur à celui du réservoir et un système de distribution du produit et de rinçage ayant une conduite d'alimentation en eau commandée par une électrovanne et débouchant dans la partie supérieure du bac pour le dosage, une canalisation coudée servant de siphon d'évacuation ayant une extrémité débouchant dans ce bac et un tuyau débouchant dans la partie supérieure de ce bac et servant de moyen de mise à l'air et de voie d'évacuation du produit, caractérisé en ce qu'il comprend un réservoir à produit (6) hermétiquement fermé et un bac pour le dosage (8) mis en communication par canalisation (12, 11) respectivement avec la partie la plus haute et la partie la plus basse de ce réservoir à produit (6).

2. Ensemble selon la revendication 1, caractérisé en ce que la conduite (1) reliant la partie la plus basse du réservoir à produit (6) et le bac pour le dosage (8), a un diamètre inférieur à celui de la canalisation servant de siphon d'évacuation (15, 18).

3. Ensemble selon la revendication 1, caractérisé en ce que la canalisation coudée servant de siphon d'évacuation (18) ayant une de ses extrémités montée, réglable en hauteur, dans le bac pour le dosage (8) assure en coopération avec le bac (8) la détermination de la dose du produit.

4. Ensemble selon la revendication 1, caractérisé en ce que le bac pour le dosage du produit (22) est un récipient réglable en volume.

5. Ensemble selon la revendication 1, caractérisé en ce que le bac pour le dosage du produit est constitué par un récipient à paroi latérale en forme de soufflet.

6. Appareil caractérisé en ce qu'il comprend un ensemble distribuant et dosant de produit liquide selon l'une des revendications 1 à 5 dans lequel l'électrovanne qui commande la conduite d'alimentation en eau du bac est actionnée par le programmateur de l'appareil.

# FIG_1

FIG_2

FIG_3

FIG_4

## DOCUMENTS CONSIDERES COMME PERTINENTS

| Catégorie | Citation du document avec indication, en cas de besoin, des parties pertinentes | Revendication concernée |
|---|---|---|
| | FR - A - 2 102 739 (EUROPE MANU-FACTURING TRUST) <br> * Revendications; figure * | 1,2,4,6 |
| | FR - A - 2 170 884 (EUROPE MANU-FACTURING TRUST) <br> * Revendications; figures * | 1,3,6 |
| | FR - A - 1 269 281 (BLANCHISSERIES ET TEINTURERIES DE FRANCE) <br> * Résumé; figures * | 1,3 |
| A | US - A - 3 038 639 (ANDERSON) <br> * Colonne 2, lignes 51-70; colonne 3, lignes 3-32; figures * | 1 |
| A | US - A - 3 021 702 (HOUSER) <br> * Colonne 4, lignes 25-75; colonne 5, lignes 1-74 * | 1 |

**CLASSEMENT DE LA DEMANDE (Int. Cl. 3)**

D 06 F 39/02
G 01 F 11/28

**DOMAINES TECHNIQUES RECHERCHES (Int. Cl. 3)**

D 06 F
A 47 L
G 01 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 17-07-1980 | D'HULSTER |

OEB Form 1503.1  06.78